# DEMANDE DE BREVET EUROPEEN

(11) **EP 1 102 230 A2**
(43) Date de publication de la demande: **23.05.2001**
(21) Numéro de dépôt: 00403235.5
(22) Date de dépôt: 20.11.2000
(51) Int. Cl.: G09B 25/02, B65G 7/08, F15B 15/06

(54) **Appareil pour la formation professionnelle d'utilisateurs de systèmes de commande hydraulique du mouvement de charges**

(30) Priorité: 22.11.1999 FR 9914659
(71) Demandeur: Bourgogne Hydro, 71530 Champforgeuil (FR)
(72) Inventeur: Chopard, Jean-Pierre, 71100 Chalon Sur Saone (FR)
(74) Mandataire: Bruder, Michel

(57) **Abrégé**

L'invention concerne un appareil destiné à la formation professionnelle d'utilisateurs de systèmes de commande hydraulique du mouvement de charges comportant un support mobile (1) d'une charge (4) dont le mouvement est commandé par un vérin (5) relié, par l'intermédiaire d'un bloc de distribution de fluide hydraulique (9), à une source de fluide hydraulique sous pression (10) est ramarquable en ce que le support mobile (1) est monté basculant sur un support fixe (2), autour d'un axe horizontal (3) et le mouvement de basculement du support mobile (1) est commandé par un vérin double effet (5) dont les deux chambres internes sont reliées respectivement à deux sorties du bloc de distribution hydraulique (9).

## Description

La présente invention concerne un appareil destiné à la formation professionnelle de concepteurs et d'utilisateurs de systèmes de commande hydraulique du mouvement de charges.

On connaît déjà des appareils à vocation pédagogique qui sont employés par des formateurs professionnels pour familiariser les futurs utilisateurs de systèmes de commande hydraulique du mouvement de charges, par exemple des techniciens de maintenance industrielle, avec les notions d'automatismes et d'asservissements en leur faisant comprendre l'influence des divers composants d'un système hydraulique. Ces appareils comportent généralement une table élévatrice supportant une charge, à mouvement ascendant commandé par un vérin simple effet alimenté par une source de fluide hydraulique sous pression, par l'intermédiaire d'un bloc de distribution de fluide. Il en résulte que seuls les mouvements verticaux d'une charge placée sur la table élévatrice peuvent être étudiés.

La présente invention vise à étendre le domaine d'étude des mouvements d'une charge à un basculement autour d'un axe, ce qui correspond en pratique à de nombreuses applications industrielles possibles, et ce en faisant varier les critères fondamentaux de la cinématique du basculement, à savoir la position et la vitesse de la charge.

A cet effet, cet appareil destiné à la formation professionnelle d'utilisateurs de systèmes de commande hydraulique du mouvement de charges comportant un support mobile d'une charge dont le mouvement est commandé par un vérin relié, par l'intermédiaire d'un bloc de distribution de fluide hydraulique, à une source de fluide hydraulique sous pression est remarquable en ce que le support mobile est monté basculant sur un support fixe, autour d'un axe horizontal et le mouvement de basculement du support mobile est commandé par un vérin double effet dont les deux chambres internes sont reliées respectivement à deux sorties du bloc de distribution hydraulique.

L'appareil suivant l'invention peut être ainsi utilisé pour la formation de techniciens destinés à manoeuvrer divers appareils tels que, par exemple, des videurs de containers, des présentoirs inclineurs, des retourneurs de charges palettisées, des basculeurs videurs, des élévateurs conditionneurs, des retourneurs de piles, des transferts de palettes, etc ...

On décrira ci-après à titre d'exemple non limitatif une forme d'exécution de la présente invention en référence aux dessins annexés sur lesquels :
- la figure 1 est un schéma simplifié d'un appareil suivant l'invention, avec un diagramme illustrant la variation des pressions dans les deux chambres du vérin double effet,
- la figure 2 est une vue en élévation d'une forme d'exécution de la partie mécanique de l'appareil représenté sur la figure 1.

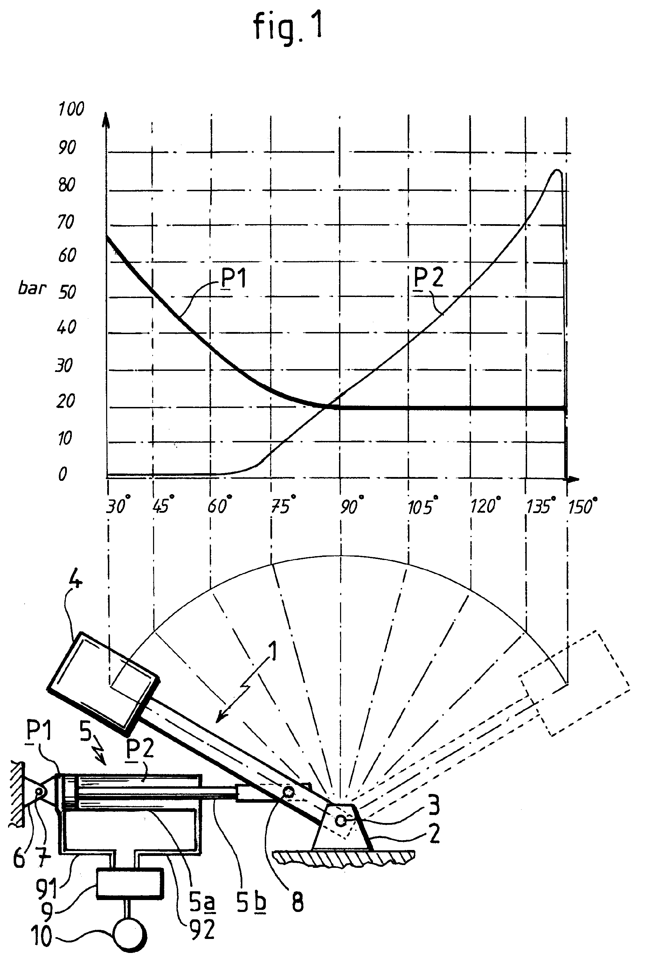

L'appareil suivant l'invention qui est représenté schématiquement sur la figure 1 a été conçu pour familiariser un utilisateur futur avec le mouvement de basculement d'une charge autour d'un axe, provoqué par un système de commande hydraulique, et plus particulièrement avec les notions d'automatismes et d'asservissements liés à un tel système. Il comporte essentiellement un support mobile 1 monté basculant, à une extrémité, sur un support fixe 2, autour d'un axe horizontal 3 et portant, à son autre extrémité, une charge 4. Le mouvement de basculement du support mobile 1 est commandé par un vérin double effet 5 dont le corps 5a est articulé, à une extrémité, sur un support fixe 6, autour d'un axe horizontal 7 parallèle à l'axe de basculement 3 et il comporte par ailleurs une tige de piston 5b traversant l'extrémité opposée du corps 5a et qui est articulée, à son extrémité, sur le support mobile 1, autour d'un axe horizontal 8 parallèle à l'axe de basculement 3.

Les deux chambres internes du vérin double effet 5 qui sont délimitées par son piston, sont reliées respectivement à deux sorties d'un bloc de distribution hydraulique 9 par des tuyauteries de liaison 91 et 92, l'entrée dudit bloc étant reliée à une source de fluide hydraulique sous pression 10.

Sur la figure 1 le support mobile 1 et la charge 4 sont représentés en trait plein en position de fin de course vers la gauche, avec une inclinaison de 30° par rapport à l'horizontale, et en tirets en position de fin de course vers la droite, également avec une inclinaison de 30° par rapport à l'horizontale. Ces valeurs de l'inclinaison correspondent à un débattement angulaire de 120°, dans les deux sens, du support mobile 1 et de la charge 4. Toutefois, les valeurs précitées des angles sont données uniquement à titre d'exemple et elles peuvent varier en fonction de la longueur de la course de la tige de piston 5b, de la position de l'axe d'articulation 8 sur le support mobile 1, etc ...

Sur la figure 1 est également représenté un diagramme illustrant la variation des pressions P1 et P2 dans les deux chambres du vérin 5, les valeurs respectives de ces pressions (en bars) étant indiquées pour des angles d'inclinaison du support mobile 1 allant de 30° à 150°.

L'appareil suivant l'invention permet, grâce à la pression du vérin double effet 5 pour la commande du basculement de la charge 4, de réaliser toutes les simulations désirées en faisant varier le positionnement et la vitesse de la charge 4 à basculer. Il permet notamment l'étude et la mise au point de régulations hydrauliques en utilisant les circuits des pressions P1 et P2 dans tous les cas d'applications courantes : charge menée, charge menante, régulation suivant les vitesses de transfert souhaitées en tenant compte de l'accélération du mouvement le cas échéant, étude en fonction de la position de la charge entre son point de départ et son point d'arrivée (précision du positionnement, vitesse d'arrivée à un point précis, accélération, décélération, etc...).

A cet égard, le bloc de distribution de fluide hydraulique 9 sera très avantageusement composé de différentes fonctions (non représentées sur les figures) telles que distributeur tout ou rien ou de type distributeur proportionnel ou de type servo-valve, ou encore de valves de retenues de charge ou d'organes de sécurité, de manière à reproduire les différents cas industriels.

En outre, les tuyauteries de liaison 91 et 92 pourront être fixes ou amovibles et comporteront éventuellement aussi différentes fonctions hydrauliques permettant des réglages ou des sécurités procurant des fonctions pédagogiques supplémentaires.

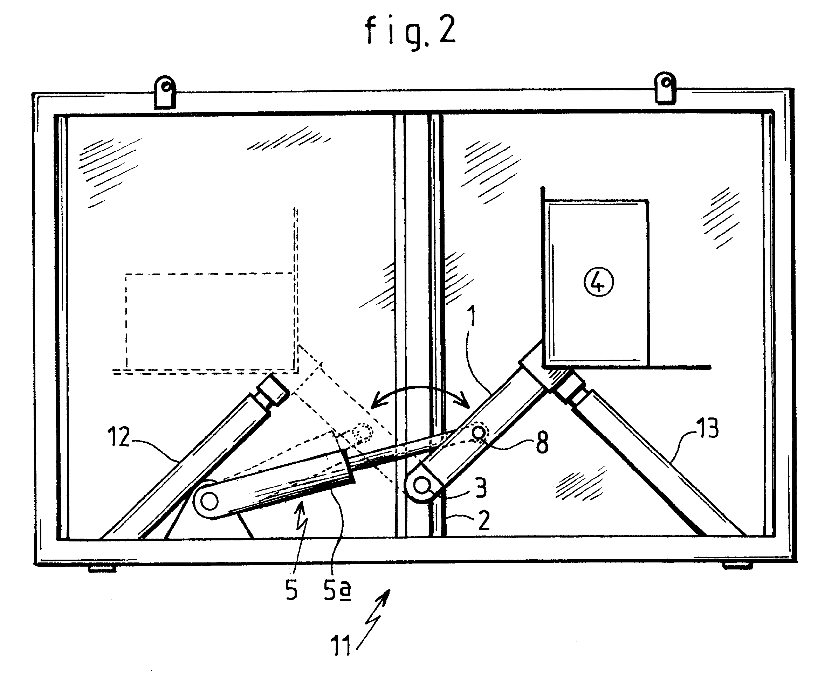

La figure 2 représente une forme d'exécution non limitative de la partie mécanique de l'appareil de la figure 1. On retrouve sur la figure 2 les mêmes éléments que ceux illustrés sur la figure 1, affectés des mêmes références numériques, tous ces éléments étant montés sur un châssis commun 11. En outre, deux butées de fin de course, à savoir une butée gauche 12 et une butée droite 13, éventuellement réglables, ont été prévues pour limiter le débattement angulaire du support mobile 1. Dans la forme d'exécution illustrée, l'angle de basculement du support mobile 1 et de la charge 4 a été limité à 90°, la charge 4 étant horizontale dans sa position extrême gauche et verticale dans sa position extrême droite.

## Revendications

1. Appareil destiné à la formation professionnelle d'utilisateurs de systèmes de commande hydraulique du mouvement de charges comportant un support mobile (1) d'une charge (4) dont le mouvement est commandé par un vérin (5) relié, par l'intermédiaire d'un bloc de distribution de fluide hydraulique (9), à une source de fluide hydraulique sous pression (10) **caractérisé** en ce que le support mobile (1) est monté basculant sur un support fixe (2), autour d'un axe horizontal (3) et le mouvement de basculement du support mobile (1) est commandé par un vérin double effet (5) dont les deux chambres internes sont reliées respectivement à deux sorties du bloc de distribution hydraulique (9), par des tuyauteries (91,92).

2. Appareil selon la revendication 1 **caractérisé** en ce que le vérin (5) comporte un corps (5a) articulé, à une extrémité, sur un support fixe (6), autour d'un axe horizontal (7) parallèle à l'axe du basculement (3) et il comporte par ailleurs une tige de piston (5b) traversant l'extrémité opposée du corps (5a) et articulée, à son extrémité, sur le support mobile 1, autour d'un axe horizontal (8) parallèle à l'axe de basculement (3).

3. Appareil selon l'une quelconque des revendications 1 ou 2 caractérisé en ce qu'il comporte deux butées de fin de course (12,13), éventuellement réglables, pour limiter le débattement angulaire du support mobile (1).

4. Appareil selon l'une quelconque des revendications précédentes **caractérisé** en ce que le bloc de distribution (9) comporte des moyens tels que distributeur tout ou rien ou proportionnel ou de type servo-valve ou encore des valves de retenues de charge ou des organes de sécurité.

5. Appareil selon l'une quelconque des revendications précédentes **caractérisé** en ce que les tuyauteries (91,92) sont fixes.

6. Appareil selon l'une quelconque des revendications 1 à 4 **caractérisé** en ce que les tuyauteries (91,92) sont amovibles.

7. Appareil selon l'une quelconques des revendications 5 et 6 **caractérisé** en ce que les tuyauteries (91,92) comportent des moyens hydrauliques procurant des fonctions pédagogiques ou de sécurité.
